(19) Europäisches Patentamt
European Patent Office
Office européen des brevets

(11) **EP 3 696 701 A1**

(12) **EUROPEAN PATENT APPLICATION**

(43) Date of publication:
**19.08.2020 Bulletin 2020/34**

(51) Int Cl.:
***G06F 21/60*** *(2013.01)*

(21) Application number: **19020070.9**

(22) Date of filing: **13.02.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **UVUE Limited
Cambridge CB4 0WS (GB)**

(72) Inventors:
• **Baykaner, Khan Richard
Great Cambourne, CB23 5JL (GB)**
• **Rønnow, Troels F.
Cambridge, CB2 9BG (GB)**
• **Nicholson, Thomas F W
Cambridge, CB1 7SR (GB)**

(74) Representative: **Norris, Timothy Sweyn
Basck Ltd.
50 - 60 Station Road
Cambridge CB1 2JH (GB)**

(54) **SYSTEM FOR EVALUATING USEFUL WORK AND METHOD OF OPERATION THEREOF**

(57) Disclosed is a computer system including spatially distributed computing devices, wherein the computing devices operate to execute data processing tasks in an asynchronous manner, wherein the system is operated via a ledger arrangement maintaining a block chain whose operation is controlled using a DAG. The computing devices operate as miners that execute tasks allocated to them, and a consensus mechanism of the system determines which given miner of the miners is permitted to add a new block to the block chain. The consensus mechanism uses a measure of useful work to select the given miner, wherein the useful work includes the miners' training machine models stored in the DAG. Moreover, evaluation metric mechanism controls the consensus mechanism when choosing the new block being updated, upon each new block that is added to the block chain.

FIG. 2

**Description**

TECHNICAL FIELD

The present disclosure relates generally to computer systems operated via use of ledger arrangements; and more specifically, to systems for measuring useful work in consensus mechanisms to select miners; the computer systems interact, for example, with a real physical environment by receiving signals therefrom and sending signal thereto, wherein the ledger arrangements ensure system stability, system safety and system robustness against third-party attacks. Moreover, the present disclosure relates to methods of operating the aforementioned systems. Furthermore, the present disclosure also relates to computer program products comprising non-transitory computer-readable storage media having computer-readable instructions stored thereon, the computer-readable instructions being executable by a computerized device comprising processing hardware to execute aforementioned methods.

BACKGROUND

In present era of technological advancement, day-to-day processes (such as mail delivery, load scheduling, contracts) have been digitized and are recorded digitally. Recording such operational records digitally allows for efficient management and timely updating of the records; the records, for example mirror onto real physical resources, machinery and such like. However, such digital records are prone to cyber-attacks and unauthorized changes therein, thereby compromising the overall reliability of the records. Presently, distributed ledgers are being employed in various applications to facilitate recording different types of operations. Notably, a distributed ledger enables securing of a session by maintaining a record relating to each of the sessions, therein. Notably, a trustless and distributed consensus mechanism is employed for appending records relating to each of the sessions. Subsequently, the distributed consensus validates each of the sessions by obtaining a resolving process for a computing task relating to each of the sessions. In such an instance, a plurality of miners competes by solving the computing task. Specifically, the plurality of miners provides a proof-of-work upon solving the computing task that is employed to validate each of the sessions. Moreover, a given miner from the plurality of miners, who solves a computing task relating to a given session first, appends a record relating to the given session on the distributed ledger. Additionally, the given miner is incentivized for providing the proof-of-work for solving the computing task.

However, solving the computational problem is an energy-intensive task; moreover, in situations where the ledger controls a real physical environment, for example manufacturing apparatus, temporal speed of response of entries on the distributed ledger are potentially important when controlling real apparatus, for example when the apparatus is a part of a continuous manufacturing plant that has to function in a continuous uninterrupted manner. Typically, solution to same computational problem is generated by the plurality of participants, wherein each of the plurality of participants performs, for example, computing algorithms to solve the computational problem. Subsequently, performing such computing algorithms to solve the computational problem leads to substantial consumption of data processing energy, energy dissipated as heat, and energy for facilitating cooling actions thereby increasing energy costs substantially.

Recently, such consensus mechanism is facilitated by a proof-of-useful work mechanism that partially recovers energy costs by employing a solution to the computational problem is for broader purposes beyond mere validation of the sessions. Additionally, implementation of such proof-of-useful work mechanism is implemented, for example, by training of machine learning models as proof of work, although other mechanisms of proof-of-work can be employed. For example, the models can be applied physically in robotic machinery for performing various real tasks, for example guiding and manipulating robotic devices required for hostile environments, for example for decommissing central cores of nuclear reactors were precision of operation and reliability of the models when used for control is paramount for safety. The trained machine learning model is verified to evaluate a quality of solutions provided by plurality of miners. Moreover, such training of the machine learning models requires reserving of training data of the machine learning models. However, reserving training data for training machine learning models is undesirable and difficult in decentralized systems (such as the distributed ledgers). In an example, the machine learning models may be trained imprecisely by comprehending noise as concepts for training thereof and thus inducing a problem of over-fitting to the machine learning model. Such machine learning models do not perform well when operated with a new data set.

Furthermore, the useful proof of work is prone to cyber-attacks and useful proof of work performed by a given miner may get stolen by a dishonest miner. The dishonest miner may use the useful proof of work as his own and may get permission to add a new block in the distributed ledger and may get incentivized.

Therefore, in light of the foregoing discussion, there exists a need to overcome the aforementioned drawbacks associated with the conventional approach for evaluating useful work for establishing consensus in a distributed system.

SUMMARY

The present disclosure seeks to provide a computer system including a plurality of spatially distributed computing devices that are coupled via a data communication network to exchange data therebetween, wherein the computing devices operate to execute data processing in an asynchronous manner. The computer system employs a block chain associated with a directed acyclic graph (DAG), wherein the directed acyclic graph defines relationships between blocks of the block chain; the present disclosure seeks to improve reliability, performance and robustness, speed, security of a decentralized system via use of distributed, secured, verifiable and reliable techniques of execution and communication.

The present disclosure also seeks to provide a method of operating a computer system including a plurality of spatially distributed computing devices that are coupled via a data communication network to exchange data therebetween, wherein the computing devices operate to execute data processing tasks in an asynchronous manner. The computer system employs a block chain associated with a directed acyclic graph (DAG), wherein the directed acyclic graph defines relationships between blocks of the block chain.

In one aspect, an embodiment of the present disclosure provides a computer system including a plurality of spatially distributed computing devices that are coupled via a data communication network to exchange data therebetween, wherein the computing devices operate to execute data processing tasks in an asynchronous manner, wherein:

> (i) the computer system is operated via use of a ledger arrangement, wherein the ledger arrangement maintains a block chain whose operation is controlled via use of a directed acyclic graph (DAG);
>
> (ii) a plurality of the computing devices operates as miners that execute tasks that are allocated to them;
>
> (iii) a consensus mechanism of the computer system determines which given miner of the miners is permitted to add a new block to the block chain;
>
> (iv) the consensus mechanism uses a measure of useful work to select the given miner that is to add the new block to the block chain, wherein the useful work includes the miners' training machine models, wherein the machine models are stored in the directed acyclic graph (DAG); and
>
> (v) an evaluation metric mechanism that controls the consensus mechanism, when choosing the new block, being updated upon each new block that is added to the block chain.

The invention is of advantage in that the ledger functions in a more stable manner when adding a new block to the block chain, for example when the ledger relates to a distributed system of nodes, for example wherein the nodes function in an asynchronous manner or pseudo-asynchronous manner. When the block chain is representative, for example "mirrors" a real physical environment, more stable operation of the block chain result in greater responsively, reliability and safety within the real physical environment.

Optionally, the evaluation metric mechanism is updated after each new block is added to the block chain, wherein the evaluation metric mechanism is updated in a random or pseudo-random manner.

Optionally, a hash of each new block is converted to a numeral modulo including a fixed number, wherein the fixed number is converted into a position in a probability distribution that determines values for parameters D, M, $\alpha$, and $\beta$ that are used for evaluating a selection by the consensus mechanism of a next new block to add to the block chain.

More optionally, the evaluation metric mechanism is computed by the consensus mechanism by employing a relationship:

$$\mathsf{L} = \Sigma \, ||y_i - \hat{y}_i|| + (\alpha D + \beta M)$$

wherein:

> (i) a parameter L denotes a loss;
>
> (ii) a parameter D denotes a data-specific performance weighting; and
>
> (iii) a parameter M denotes a model specific performance, with $\alpha$ and $\beta$ being coefficients that vary from block-to-block of the block chain.

Optionally, the consensus mechanism uses a verification process to determine the measure of useful work to select the given miner that is to add the new block to the block chain.

Optionally, the computing system is coupled to a sensing arrangement that provides input data to the system representative of measure physical parameters of a real physical environment, and the block chain is employed to generate output data via use of smart contracts associated with the block chain, wherein the output data is used as control parameters for controlling operation of the real physical environment. The computing system, in such an embodiment, results in real physical changes in the real physical environment, depending upon real physical conditions sensed within the environment. The real physical environment is, for example, a hazardous environment, for example within a nuclear reactor, wherein the computer system is remotely controlling a robotic device.

In another aspect, an embodiment of the present disclosure provides a method of operating a computer system including a plurality of spatially distributed computing devices that are coupled via a data communication network to exchange data therebetween, wherein the computing devices operate to execute data processing tasks in an asynchronous manner, wherein the method includes:

(i) operating the computer system via use of a ledger arrangement, wherein the ledger arrangement maintains a block chain whose operation is controlled via use of a directed acyclic graph (DAG);

(ii) using a plurality of the computing devices operating as miners that execute tasks that are allocated to them;

(iii) using a consensus mechanism of the computer system to determine which given miner of the miners is permitted to add a new block to the block chain;

(iv) arranging for the consensus mechanism to use a measure of useful work to select the given miner that is to add the new block to the block chain, wherein the useful work includes the miners' training machine models, wherein the machine models are stored in the directed acyclic graph (DAG); and

(v) using an evaluation metric mechanism that controls the consensus mechanism when choosing the new block is updated upon each new block that is added to the block chain.

In yet another aspect, an embodiment of the present disclosure provides a computer program product comprising a non-transitory computer-readable storage medium having computer-readable instructions stored thereon, the computer-readable instructions being executable by a computerized device comprising processing hardware to execute a method as claimed herein above.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

FIG. 1 is an illustration of a computer system, in accordance with an embodiment of the present disclosure;

FIG. 2 is a schematic illustration of the computer system of FIG. 1 in operation, in accordance with an embodiment of the present disclosure;

FIG. 3 is a schematic illustration of a chain of micro-programs, in accordance with an embodiment of the present disclosure; and

FIG. 4 is an illustration of steps of a method of operating a computer system, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides a computer system including a plurality of spatially distributed computing devices that are coupled via a data communication network to exchange data therebetween, wherein the computing devices operate to execute data processing tasks in an asynchronous manner, wherein:

(i) the computer system is operated via use of a ledger arrangement, wherein the ledger arrangement maintains a block chain whose operation is controlled via use of a directed acyclic graph (DAG);

(ii) a plurality of the computing devices operates as miners that execute tasks that are allocated to them;

(iii) a consensus mechanism of the computer system determines which given miner of the miners is permitted to add a new block to the block chain;

(iv) the consensus mechanism uses a measure of useful work to select the given miner that is to add the new block to the block chain, wherein the useful work includes the miners' training machine models (for example, machine models, data encryption tasks, data decryption tasks, data compression tasks, data decompression tasks, but not limited thereto), wherein the machine models are stored in the directed acyclic graph (DAG); and

(v) an evaluation metric mechanism that controls the consensus mechanism, when choosing the new block, being updated upon each new block that is added to the block chain.

In another aspect, an embodiment of the present disclosure provides a method of operating a computer system including a plurality of spatially distributed computing devices that are coupled via a data communication network to exchange data therebetween, wherein the computing devices operate to execute data processing tasks in an asynchronous manner, wherein the method includes:

(i) operating the computer system via use of a ledger arrangement, wherein the ledger arrangement maintains a block chain whose operation is controlled via use of a directed acyclic graph (DAG);

(ii) using a plurality of the computing devices operating as miners that execute tasks that are allocated to them;

(iii) using a consensus mechanism of the computer system to determine which given miner of the miners is permitted to add a new block to the block chain;

(iv) arranging for the consensus mechanism to use a measure of useful work to select the given miner that is to add the new block to the block chain, wherein the useful work includes the miners" training machine models (for example, machine models, data encryption tasks, data decryption tasks, data compression tasks, data decompression tasks, but not limited thereto), wherein the machine models are stored in the directed acyclic graph (DAG); and

(v) using an evaluation metric mechanism that controls the consensus mechanism when choosing the new block is updated upon each new block that is added to the block chain.

The present disclosure seeks to provide a solution to a technical problem of evaluation of useful work published by computing devices working in a spatially distributed architecture. In addition, the present disclosure also seeks to provide for a simple and efficient consensus mechanism for establishing consensus within distributed systems, but not limited thereto. In addition, the present disclosure also seeks to provide for machine models that generalise well to any new training data or computing tasks such as, but not limited to, data encryption tasks, data decryption tasks, data compression tasks, data decompression tasks. Therefore, the present invention provides for a solution for substantially eliminating a problem of over-fitting while training machine models. In addition, the present disclosure increases availability and liveliness of the computing device that work in the spatially distributed architecture. Furthermore, the system also allows for training machine models in a collaborative as well as decentralized manner. Moreover, the computer system disclosed herein employs an evaluation mechanism for a fair evaluation of quality of work submitted by miners. In addition, the system promotes the miners for developing smaller and more compressed machine models that require less time for execution thereof. Therefore, such machine models require less time and processing cost and are energy efficient. Moreover, the system and method disclosed herein ensures security and validity of the machine models trained by the miners. Notably, the machine models are verifiable, wherein ownership and validity thereof is verified by the system to ensure authentication of the trained machine model and ownership thereof.

Disclosed herein is the computer system that in operation, establishes a consensus within the computer system for adding a new block to the block chain. The computer system includes the plurality of spatially distributed computing devices. Notably, the spatially distributed computing devices are distributed (namely, decentralized) over a geographical area. Beneficially, distributed architecture of the computing devices increases a liveliness and availability of the system by decreasing downtime of the system. Furthermore, the plurality of computing devices are computational elements that are operable to respond to, and process instructions that drive, the computer system. Optionally, the plurality of computing devices includes, but are not limited to, a microprocessor, a bespoke design of integrated circuit (ASIC), a microcontroller, a complex instruction set computing (CISC) microprocessor, a reduced instruction set (RISC) microprocessor, a very long instruction word (VLIW) microprocessor, an artificial intelligence (AI) computing engine based on hierarchical networks of variable-state machines, or any other type of processing circuit. Furthermore, the computing devices can be one or more individual processors, processing devices and various elements associated with a processing device that may be shared by other processing devices. Additionally, the plurality of computing devices, processing devices and elements are arranged in various architectures for responding to and processing the instructions that drive the system.

Moreover, the computing devices are coupled via the data communication network to exchange data therebetween. The plurality of computing devices is communicably coupled to each other via the data communication network. The data communication network allows for communication among the plurality of computing devices. In other words, each of the plurality of computing devices is capable of communicating with other computing devices via the data communication network in order to perform operations within the system and communicate data associated with the operations. Notably, the data communication network relates to an arrangement of interconnected, programmable and/or non-programmable components that, when in operation, facilitate data communication between one or more electronic devices and/or databases. Furthermore, the data communication network may include, but is not limited to, a peer-to-peer (P2P) network, a hybrid peer-to-peer network, local area networks (LANs), radio access networks (RANs), metropolitan area networks (MANs), wide area networks (WANs), all of or a portion of a public network such as global computer network known as the Internet®, a private network, a cellular network and any other communication system. Additionally, the data communication network employs wired or wireless communication that can be carried out via one or more known protocols, including, but not limited to, Internet Protocol (IP), Wireless Access Protocol (WAP), Frame Relay, or Asynchronous Transfer Mode (ATM). Moreover, any other suitable protocols using voice, video, data, or combinations thereof, can also be employed, for example VoIP.

In an example embodiment, the data communication network is implemented as a distributed peer-to-peer (P2P) network of interconnected plurality of computing devices.

Furthermore, the computing devices operate to execute data processing tasks in an asynchronous manner. The computing devices execute the data processing tasks in order to facilitate seamless functioning of the computer system. Notably, the data processing tasks include operations within the system such as task allocation, task execution, updating the block chain, storing information in the ledger arrangement and so forth. Notably, the data processing tasks are performed by the computing devices in asynchronous manner that enables each of the computing devices to work independent to other computing devices in the computer system. The asynchronous manner of operation of the computing device relates to functioning of the computing devices that is not time controlled. In other words, the data processing tasks performed by any one of the computing devices need not be time synchronized with any of the computing devices. Beneficially, the asynchronous manner of performing the data processing tasks by the computing devices reduces processing complexity and time complexity of execution thereof within the computer system by eliminating need of communicating signals among the computing devices for time synchronization of the data processing tasks.

Moreover, the computer system is operated via use of the ledger arrangement. The ledger arrangement used herein is a sequential database that includes blocks of data associated with data processing tasks. Furthermore, the ledger arrangement is any one of: a public ledger, a private ledger. Furthermore, the ledger arrangement with public (namely, un-permissioned) control of access is open for every participant of the system; however, it will be appreciated that it is highly desirable that data exchanges occurring in respect of the ledger arrangement are implemented via signals that are encrypted and/or obfuscated, to resist malicious third-party attacks, corruption or interference. Alternatively, the ledger arrangement with private (namely, permissioned) control of access have an access control layer implemented therein; however, as aforesaid, it will be appreciated that it is highly desirable that data exchanges occurring in respect of the ledger arrangement are implemented via signals that are encrypted and/or obfuscated, to resist malicious third-party attacks, corruption or interference. Specifically, participants of the system have a control over who can join the computer system and who can participate in the data processing tasks within the computer system. Additionally, such a ledger arrangement has access protection rights with defined constraints regarding rights to be exploited by the participants.

Furthermore, the ledger arrangement maintains the block chain whose operation is controlled via use of a directed acyclic graph (DAG). The block chain maintained by the ledger arrangement stores executable contract object for a given session of storing records to be added in the block chain. Notably, a new block is added in the block chain for every new session that is initiated in the computer system. Notably, time between addition of a first block and a second block in the block chain is a block-time of the first block. The computer system employs the block chain for recording operational records and information associated with sessions initiated in the block chain, wherein the block chain refers to a digital database that, when in operation, stores operational records and related data in a chronological manner. The blockchain includes one or more blocks therein. Each of the one or more blocks in the block chain includes a reference to a previous block. Such a reference to the previous block gives the block chain a linear structure. Therefore, the block chain provides a time sequenced data structure for recording sessions within the computer system.

Throughout the present disclosure, the term *"session(s)"* refers to an exchange of consideration (for example, provided as services, information, products and so forth between two or more parties participating in the session (namely, participants of the session).

Throughout the present disclosure, the term *"executable contract object"* refers to a digital document that includes constraints and details such as time, date, considerations, details of parties participating in the session and so forth related to a given session. The executable contract object includes at least one human readable contract summary, and following machine-readable aspects: data specification, contract body, mining algorithm, and objective function, wherein the contract body references a problem definition (namely, a task). The executable contract object specifies a changing behavior of objective function, wherein the objective function contains evaluation metric. The problem provided in the executable contract object is solved by miners and solution of the problem is submitted by the miners. The solution submitted by the miners is stored in the directed acyclic graph (DAG). Optionally, the executable contract object is a smart contract. It is to be understood that the term "problem" and "task" are used interchangeably throughout the present disclosure

Moreover, operations of the block chain are controlled via use of the directed acyclic graph (DAG). Notably, addition of a new block in the block chain is performed by a miner that successfully executes task allocated thereto. The miner is enabled to store a proof of work in the directed acyclic graph (DAG). The directed acyclic graph (DAG) is used for storing data required for processing the sessions within the computer system. Optionally the directed acyclic graph (DAG) itself is protected via encryption, for example encryption firewalls. In addition, the directed acyclic graph (DAG) is created for each of the blocks of the blockchain, wherein the directed acyclic graph includes one or more nodes. It will be appreciated that the directed acyclic graph (DAG) is a finite directed graph having no cycles (namely, loop) therein. Notably, length of the directed acyclic graph (DAG) depends upon a number of miners submitting work thereof in the directed acyclic graph (DAG). The directed acyclic graph (DAG) grows in between two consecutive blocks of the block chain, wherein an end of the directed acyclic graph (DAG) for a given block indicates termination of block-time associated with the given block. Consequently, the termination of block-time associated with the given block allows for addition of new blocks in the blockchain. The block-time associated with each of the given block indicates a time for which session associated with the given block is being processed within the computer system.

Moreover, the plurality of computing devices operates as miners that execute tasks that are allocated to them. The computing devices in the computer system that perform the tasks included in the executable contract object are miners of the computer system. Notably, a miner that has completed the allocated task successfully is allowed to add a new block to the block chain once consensus is established within the system.

Optionally, the miner who adds the new block in the block chain is provided with, incentives (for example, remuneration, a technical consideration as aforementioned, rewards and so forth) for a successful completion of the task. In addition, incentives are payments in a form of a value, a token, a fiat currency and the like *in lieu* of the task performed by the miner.

Moreover, the consensus mechanism of the computer system determines which given miner of the miners is permitted to add the new block to the block chain. The consensus mechanism of the computer system includes the computing devices that verify the work submitted by the miners. The computing devices verifying the work submitted by the miners establish agreement within the system regarding performance, accuracy, authentication and truthfulness of the work submitted by the miner. The miner who has submitted most optimal (in terms of training cost, time consumed, processing complexity and the like) work out of all the work submitted by the miners is permitted to add the new block to the block chain.

Beneficially, use of directed acyclic graph (DAG) to store the work submitted by the miners allows for a simplistic approach for accessing the work submitted by each of the miners.

Moreover, the consensus mechanism uses the measure of useful work to select the given miner that is to add the new block to the block chain. The computing devices from the plurality of spatially distributed computing devices verify the work submitted by the miners to determine usefulness of the work. The computing devices verify the useful work by executing them and analysing and validating performance and output thereof. In addition, the usefulness of the work is indicated by the measure of useful work. The measure of useful work is a single value indicator of performance of work submitted by the miners. It is to be understood that the terms *"work"* and *"useful work"* are used interchangeably in the present disclosure. Furthermore, the performance of work is measured in terms of a physical parameter, for example, computing time, time to complete one or more computing tasks, energy consumption, energy dissipation, memory or storage use and similar. Such useful work includes, for example, amounts of data encryption, data decryption, data compression, data decompression, data obfuscation, data de-obfuscations (or any combination of these) that are performed.

Optionally, the measure of useful work is a numerical indicator. In an instance, the work is considered to be more useful if it has a higher numerical value of the measure of useful work. In an example, a first work is submitted by a first miner, wherein the first work is having value of measure of useful work as '5' and a second work that is submitted by a second miner, wherein the second work is having a value of a measure of useful work as '7'. In such example, the measure of useful work submitted by the first and second miner is considered as a parameter for establishing consensus within the system. The second miner is granted permission for adding a new block to the block chain. Alternatively, optionally, the work is considered to be more useful if it has a lower numerical value of measure of useful work. Furthermore, optionally, the work submitted by the miners is graded (namely, grade A, B, C or I, II, III) for calculating the measure of useful work. The miner having submitted the work with highest grades is permitted to add the new block to the block chain. Beneficially, submitting the useful work enables the miners to later on monetize the work. In addition, generating the useful work prevents waste of processing energy, cost and time invested therein by the miners.

Furthermore, the useful work includes the miners training machine learning models, wherein the machine learning models are stored in the directed acyclic graph (DAG). The useful work performed by the miners includes training machine learning models on a training data set. Notably, machine learning is an application of artificial intelligence that provides systems to automatically learn and improve from experience without being explicitly programmed. In addition, machine learning is employed in digital applications to enable them to access data and learn themselves. Moreover, machine learning has property of developing models having higher production cost (namely, cost of training models) and cheaper cost of quality evaluation. Furthermore, submission of the machine learning models by the miners as useful work is performed using useful proof of work technique. In addition, submission of the machine learning models by the miners increases usability of the work submitted by the miners. In a first example, the miners train a machine learning model for classifying objects in an image. In another example, the miners train a machine learning model for minimizing noise in a data set.

Furthermore, storing the machine learning models trained by the miners in the directed acyclic graph (DAG) increases availability of the machine learning models. Therefore, the machine learning models can be used later and a miner thereof gets benefitted.

Furthermore, the computer includes the evaluation metric mechanism that controls the consensus mechanism, when choosing the new block, being updated upon each new block that is added to the block chain. The evaluation metric mechanism generates an evaluation metric for each of the machine learning models. The evaluation metric is used to determine quality if work submitted by the miners. Notably, consensus within the computer system is established for a miner among the miners having a value of evaluation metric higher than each of the miners. In addition, the miner having a value of evaluation metric higher than each of the miners is permissioned to add a new block to the black chain.

Optionally, the evaluation metric mechanism is an arbitrarily complex system, for example a neural network pre-initialized in some meaningful domain-specific way, or a simplistic metric (e.g. such as mean squared error), wherein the parameters are updated in random or pseudo-random manner for each new block. Therefore, result ensures that over-fitting does not occur in the machine learning model, and simpler machine learning model giving more accurate predictions is rewarded. Referring to the first example, a miner of a given machine learning model that identifies highest number of objects in the image is permitted to add a new block to the block chain.

Moreover, the evaluation metric mechanism is updated after each new block is added to the block chain, wherein the evaluation metric mechanism is updated in a random or pseudo-random manner. The evaluation metric mechanism is updated to introduce changes based upon the task to be allocated to the miners in next block. Furthermore, the evaluation metric mechanism is updated after each block in a random or pseudo-random manner, wherein parameters for updating the evaluation metric mechanism are determined according the content of each new block. The evaluation metric mechanism is updated based on random or pseudorandom manner of selecting values, wherein in updating evaluation metric mechanism in a random manner involves a random function generator. In addition, updating evaluation metric mechanism in a pseudo-random manner involves a pseudo-random function generator. Beneficially, updating the evaluation metric mechanism after each block-time ensures a fair measure of useful work submitted by the miners as evaluation criteria is always different and evaluation parameters cannot be predicted by a dishonest (namely, fraudulent) miner.

Optionally, random manner of updating evaluation metric mechanism involves complex mathematical and cryptographical operations. A hash of each new block is converted to a numeral modulo including a fixed number, wherein the fixed number is converted into a position in a probability distribution that determines values for parameters D, M, $\alpha$, and $\beta$ that are used for evaluating a selection by the consensus mechanism of a next new block to add to the block chain. Such parameters generated for evaluating the work submitted by the miners, that get updated after each new block is added, ensures a fair evaluation of quality of work submitted by the miners.

Optionally, the evaluation metric mechanism is computed by the consensus mechanism by employing a relationship:

$$L = \Sigma \parallel y_i - \hat{y}_i \parallel + (\alpha D + \beta M)$$

wherein:

(i) a parameter L denotes a loss;
(ii) a parameter D denotes a data-specific performance weighting; and
(iii) a parameter M denotes a model specific performance, with $\alpha$ and $\beta$ being coefficients that vary from block-to-block of the block chain. The aforementioned relationship provides for simple yet non-predictable evaluation metric mechanism for evaluating quality of the work. Notably, D specifies a scaling on prediction error of each data point with a different scaling applied to each data point. Similarly, to meta learning algorithm known as 'boosting', where data points that were previously incorrectly labelled by a machine learning model have an increasingly greater scaling applied, here the scaling could be applied (either or both) across the miners (i.e. data labelled wrongly by many miners in this block are scaled more) or across blocks (i.e. data labelled wrongly by a given miner across many blocks) are scaled more. Furthermore, M is depicted a factor penalizing number or values of free parameters in the machine learning model; or in a more complex example M could be construed as a measure of compressibility of a machine learning model, wherein the compressibility of the machine learning model relates to possible reduction in size of the machine learning model. Furthermore, the quality of work in the aforementioned relationship is identified as inverse of loss (parameter L).

Optionally, an executable contract object proposer specifies a range of permissible values for $\alpha$ and $\beta$, as well as specific method (or selection of methods) for calculating D and M, and also specifies a probability of selecting across different implementations of D and M. The executable contract object proposer also specifies a termination criterion (upon which the executable contract object no longer accepts new miners proposing solutions). The executable contract object proposer is a transacting party who is responsible for proposing formulation of the executable contract object for a new block to be added in the block chain.

Optionally, the evaluation metric mechanism randomizes value of evaluation parameters by applying techniques for establishing consensus such as "DFinity random beacon", wherein the DFinity random beacon is a verifiable random function (VRF) that produces a stream of outputs over time. In addition, the executable contract object is generated with permissible ranges for the evaluation parameters ensuring that the evaluation parameters remain unpredictable. The permissible range of the evaluation parameters changes with age of the executable contract object (in terms of number of blocks added in the block chain), and a termination condition, such as when performance of a miner falls too low, for the executable contract object may also be imposed.

Optionally, the executable contract object proposer is permitted to indicate effectiveness and usefulness of a given machine learning model; and to feed this back as a signal to prioritize or de-prioritize the given model for future invocations. Notably, the executable contract object proposer is not able to determine the machine learning model that will be evaluated at any given time when the executable contract object associated with the executable contract object proposer is executed, therefore the executable contract object proposer has limited capacity to penalize (namely, punish) the miners.

In an embodiment of the present invention, the computer system is implemented to create a protocol where the machine learning models submitted by a miner are proprietary. In an instance, work submitted by each of the miners is labelled and can be identified distinctly. In addition, such label varies from miner to miner. Each of the miners train a machine learning model on a training data set to improve performance of the machine learning model. The miners may over-train the machine learning model while intending to improve performance of the machine learning model. Such over-training prohibits the machine learning model from generalizing well on new data sets. Therefore, a problem of overfitting arises in the machine learning model. Notably, overfitting refers to over-training the machine learning model with a training data set due to which the machine learning model learns noises in the training data set as concepts and does not perform well on any new data set and becomes useless. The present invention substantially eliminates the problem of overfitting from the machine learning models by introducing penalization components that lessens the problem of overfitting. Notably, a miner is penalized based upon a measure of useful work submitted thereby. In other words, the miner is penalized for a low performing machine learning model submitted thereby. Therefore, the miner always tends to submit the useful work having a high measure of useful work.

In another embodiment of the present disclosure, the miners train the machine learning model collaboratively up to N training steps and work separately after N training steps to complete training the machine learning model, wherein value of N is mentioned in the executable contract object. The difference between the measure of useful work before training and after training as evaluated by the evaluation metric mechanism is measure of improvement attained by the miners. It is to be understood that small value of N desirable to guarantee a short block-time, or if collaborative training regime has miners training as-and-when new data becomes available. Notably, collaborative training of machine learning models suffers from theft of work. In an instance, when a miner propagates information related to useful work thereof to be added to the directed acyclic graph for adding a new block to the block chain, a dishonest miner might receive this information and write the useful work as if it was performed thereby; if the dishonest miner gets permissioned to add the new block in the block chain, theft of work gets completed. The present disclosure implements a verification process for ensuring ownership of the useful work submitted by the miners. It is to be understood verification of the useful work is cheaper than performing the task. Similarly, verification of performance of the machine learning model is cheaper (in terms of processing complexity, time complexity, energy consumption and other performance related parameters) than training the machine learning model. Notably, the present disclosure ensures that the useful work is verified without every computing device in the system having to verify each portion of the useful work.

Optionally, the miners introduce checkpoints within the useful work submitted thereby. The useful work is divided into multiple micro-programs with checkpoint introduced therein and forms a chain of micro-programs and the miner submits the useful work, in form of a checkpointed chain of micro-programs, in the directed acyclic graph (DAG). In an example, a miner trains a model for "100" epochs (namely, iterations). The miner presents a chain of "50" checkpoints each constituting a state of the machine learning model after two subsequent training epochs. Furthermore, generating the useful work with checkpoints allows distributing verification of the useful work among a plurality of the miners (namely, verifiers), wherein miners who verify work of other miners are termed as verifiers. Therefore, the useful work of a given miner is always verified quickly as enough miners are recruited to verify the work. Beneficially, the useful work is published by the miners on the directed acyclic graph (DAG), therefore, the miners that have published a work with low evaluation metric are provided with an opportunity to initialize from the useful work previously published by them on the directed acyclic graph (DAG).

Optionally, the consensus mechanism uses a verification process to determine the measure of useful work to select the given miner that is to add the new block to the block chain. The verification process is carried by the plurality of miners that have the useful work distributed among them based upon checkpoints introduced therein. In addition, training of the machine learning models is built upon a series of connected micro-programs. The machine learning model is divided into micro-programs that are linked together and form a chain of micro-programs. Furthermore, the first micro-program is initiated with an initiator value calculated by hashing public key of the miner with a nonce. Subsequently, the micro-programs are linked by either hashing a computational process or output of the computational process. Preferably, the outcome of the computational process is hashed in order to link the micro-programs. Notably, each of the micro-programs only has access to a state database having information associated with state of the computer system and the directed acyclic graph (DAG), wherein the access to the state database and the directed acyclic graph is facilitated by use of an access means. Such limitation on access of data is imposed to ensure security of the computer system. In the present embodiment, the miners publish public key, nonce, and the series of checkpoints of useful work thereof. Any of the micro-programs in the chain of micro-programs is easily verifiable by running the micro-program with an initiator value. In practice, each micro-program performs same series of logical steps, but since each initiator value is different resulting checkpoint is also different.

Optionally, the verification process determines security threats to the computer system in following cases: honest miner and honest verifier, honest miner and dishonest verifier, dishonest miner and honest verifier, dishonest miner and dishonest verifier. In an instance, when the miner and the verifier are honest, both miners and verifiers perform honestly, the chain of micro-programs is verified as valid and the useful work of the miner will be accepted. Notably, the useful work will be accepted as per underlying distributed ledger consensus mechanism of useful proof of work, wherein the miner having highest value of evaluation metric is permissioned to add new block in the block chain. Alternatively, for proof of stake mechanism of establishing consensus the miner with highest stake in the session is permissioned to add new block in the block chain.

Optionally, in another instance, when the miner is honest and the verifier is dishonest in performing respective work thereof, the miner produces the useful work and submits a chain of micro-programs containing checkpoints in the useful work. Subsequently, multiple verifiers are assigned to verify each of the micro-programs in the chain of micro-programs submitted by the miner. the dishonest verifier falsely claims a micro-program to be invalid in order to prevent the honest miner from being permitted to add the new block. Furthermore, additional verifiers are recruited to re-verify the micro-programs that are marked invalid. A trust level of the dishonest verifier is decreased if the micro-program marked invalid is marked valid during re-verification process. In addition, appropriate steps, such as ejecting the dishonest verifier miner from the computer system, or imposing a temporary ban, can be implemented. Optionally, in yet another instance, when the miner is dishonest and the verifier is honest in performing respective work thereof. Notably, as the verifiers are honest any invalid work submitted to the computer system gets rejected and the miner is penalized. Furthermore, in an instance, when the miner and the verifier are dishonest in performing respective work thereof. The dishonest miner produces invalid micro-programs which the dishonest verifier claims as valid. Notably, the verifiers are randomly selected and assigned for verifying the micro-programs that substantially reduces a probability of the dishonest verifier assigned for verifying the work submitted by the dishonest miner.

Optionally, the computer system ensures security by assigning micro-programs to be always verified by multiple verifiers, even if they are valid. Hyperparameters defining a number of additional verifiers to recruit in cases of valid or invalid micro-programs is embedded into the executable contract object and/or consensus mechanisms of the computer system. Beneficially, such multiple verification of the micro-programs ensures that only valid work is accepted in the system and an honest miner is permissioned to add the new block in the block chain.

Optionally, reduced computational cost of the micro-programs is ensured by leaving a random subset of checkpoints unverified. It is to be understood that the dishonest miner cannot know which checkpoints will be verified, therefore the dishonest miner cannot produce only a subset of valid checkpoints.

Optionally, reduced computational cost of verification process is achieved by requiring only the useful work, having a probability of getting highest evaluation metric, to be verified by the verifiers. The micro-programs to be verified belongs to only one miner or K miners having a high evaluation metric.

Optionally, the computer system requires a deposit from the miners. The deposit obtained from the miners is used to penalize the miners for a dishonest work and/or dishonest verification.

Optionally, the computer system provides security from cyber threats and attacks such as 51% attack, double spending and so forth. In an instance the computer system prevents 51% attack, wherein the 51% attack is a majority attack that is an attack on the system, wherein an attacker has chance to work even when the system waits for some confirmations, the 51% attack requires extremely high hash rate. In addition, possibility of the 51% attack is further reduced within the system by simultaneously executing heterogeneous (across different problem domains and fields) mining tasks and/or including a hybrid proof of stake/ useful proof of work (PoS/uPoW) technique.

Optionally, the executable contract object expires after a given level of performance or certain number of blocks, after which the executable contract object no longer contributes to adding blocks to the block chain. In an instance of a single miner having a greatly superior algorithm, this condition is quickly reached, and any effect on selecting subsequent block winners gets curtailed.

Optionally, the computing system is coupled to a sensing arrangement that provides input data to the system representative of measure physical parameters of a real physical environment, and the block chain is employed to generate output data via use of smart contracts associated with the block chain, wherein the output data is used as control parameters for controlling operation of the real physical environment. The sensing arrangement is installed in a physical environment and, in operation, senses physical parameters of the real physical environment. The sensing arrangement includes one or more sensors employed to sense physical parameters such as precipitation, light, fire, motion, temperature and so forth. The sensing arrangement provides data associated with any of such physical parameters sensed by the one or more sensors to the computing system. The data provided to the computer system is provided to the miners to perform a given task such as predicting temperature of the physical environment for next one week based on previous temperature patterns, predicting probability and percentage of rain in the physical environment based on previous precipitation patterns and so forth. The miners perform the given task and publish a work thereof on the directed acyclic graph (DAG). Subsequently, the work of each of the miners is evaluated using the evaluation metric mechanism and a miner having highest evaluation metric is permitted to add a new block to the block chain and produce output, using executable contract object (namely, the smart contract) for controlling physical parameters of the environment. Beneficially, associating the computer system with the sensing arrangement provides the useful work that is efficient in analyzing, processing, predicting data related to physical parameters of the real environment.

In an implementation example of the invention disclosed herein includes following steps executed within the computer system:

In an implementation example of the invention disclosed herein includes following step executed within the computer system:

1. An executable contract object (namely, a smart contract) is set up to allow a plurality of miners to be rewarded for training a machine learning model to classify images based on a known training data set. The smart contract encodes architecture of the machine learning model, as well as starting parameters thereof, wherein the starting parameters may be randomly initialized or set as parameters from a previous model.

2. "10 miners" from the plurality of miners subscribe to train under the smart contract.

3. Each of "10 miners" selects a nonce and computes an initializer value as the hash of their public key and the nonce.

4. Each of the "10 miners" utilises a built-in backpropagation function of the executable contract object to compute 100 mini-batches of training, randomly selecting batches of data based on the initializer values.

5. Each miner publishes its public key, nonce, and sequence of 10 checkpoints.

6. An objective function built into the executable contract object analyses performance of a final checkpoint of all 10 miners' published work.

7. The final checkpoint of trained machine learning model published by miner 7 has highest evaluation metric. Subsequently, remaining 9 miners of the "10 miners" are each assigned a checkpoint to verify.

8. Each of the remaining 9 miners hashes the checkpoint that they are assigned with public key & nonce of miner 7 and calls the built-in backpropagation function which executes 10 steps of training using provided hash to randomly select the same mini-batch as was previously selected by miner 7 during training of the machine learning model.

9. Each of the remaining 9 miners confirms whether parameters of a resulting model match a next checkpoint in the chain of micro-programs.

10. "Miner 3" claims that a checkpoint does not match, so two randomly selected miners re-verify the checkpoint and find that it was indeed valid. "Miner 3" is penalized and ejected from further participation in the computer system.

11. Machine learning model published by "miner 7", having highest evaluation metric therefore "miner 7" is awarded and permitted to add a new block in the block chain, wherein "miner 7" has an additional mining reward in form of virtual money, digital money, tokens, fiat money and the like. Furthermore, the new block added by the "miner 7" the machine learning model trained by the "miner 7" as an initial state of the machine learning model for a next block to be added in the block chain. Alternatively, the initial state of the machine learning model is set as average of top K machine learning models submitted by the miners.

The aforementioned implementation example describes a case of a single training data set uploaded at a time of construction of the executable contract object, however in an alternative implementation it is also possible to include a function in the executable contract object for adding new training data to a pool of training data, and the executable contract object includes mechanisms for weighting randomized data selection (for example towards or away from new training data). Therefore, an element of collaboration can be incorporated: miners adding new training data to the executable contract object. In addition, incentives for example a share of the mining reward, or stake in adding new block, are given to miners contributing training data to the executable contract object. Furthermore, the training data provided by miners are evaluated to verify quality and relevance of the training data contributed. In an instance, only verified miners are permitting to contribute training data, and further verification measures are utilised to evaluate subsets of contributed training data.

The present disclosure also relates to the method as described above. Various embodiments and variants disclosed above apply mutatis mutandis to the method.

In yet another aspect, an embodiment of the present disclosure provides a computer program product comprising a non-transitory computer-readable storage medium having computer-readable instructions stored thereon, the computer-readable instructions being executable by a computerized device comprising processing hardware to execute a method as claimed herein above.

DETAILED DESCRIPTION OF THE DRAWINGS

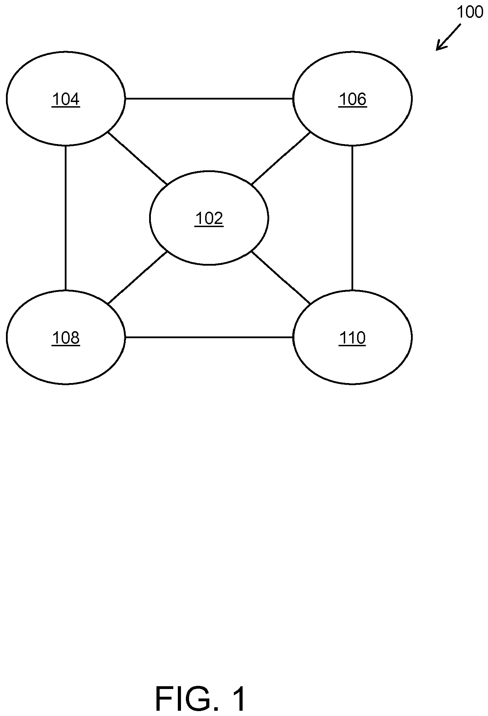

Referring to FIG. 1, there is provided an illustration of a computer system **100,** in accordance with an embodiment of the present disclosure. The computer system **100** includes a plurality of spatially distributed computing devices (depicted as computing devices **102, 104, 106, 108** and **110)** that are coupled via a data communication network to exchange data therebetween, wherein, when in operation, the computing devices (namely, the computing devices **102, 104, 106, 108** and **110)** operate to execute data processing tasks in an asynchronous manner. Typically, the computing devices (namely, the computing devices **102, 104, 106, 108** and **110)** operate as miners that execute tasks that are allocated thereto.

It may be understood by a person skilled in the art that the FIG. 1 includes a simplified illustration of the computer system **100** for sake of clarity only, which should not unduly limit the scope of the claims herein. The person skilled in the art will recognize many variations, alternatives, and modifications of embodiments of the present disclosure.

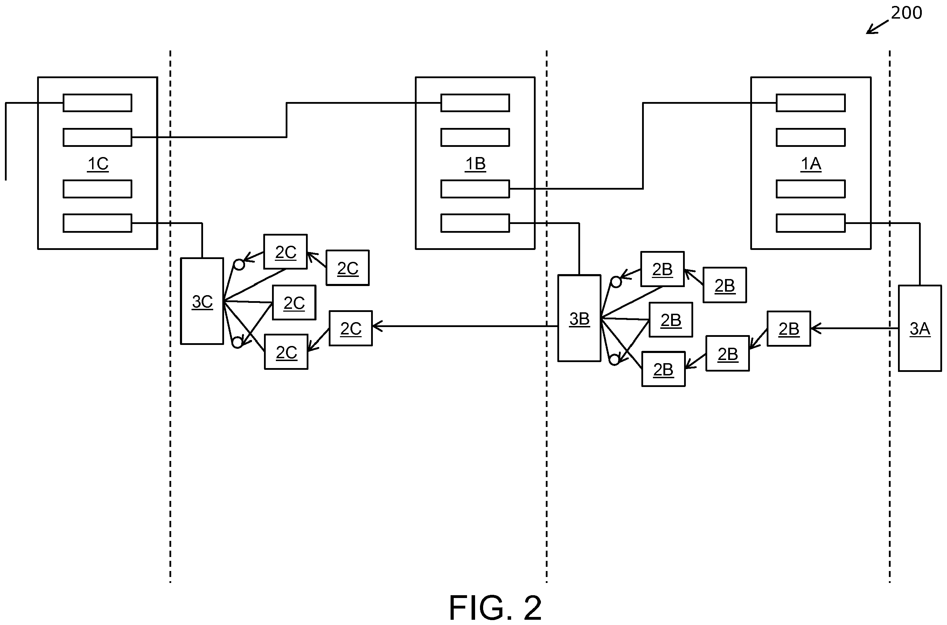

Referring to FIG. 2, there is provided a schematic illustration of the computer system **200** (such as the computer system **100** of FIG. 1) in operation, in accordance with an embodiment of the present disclosure. The computer system **200** is operated via use of a ledger arrangement (not shown), wherein the ledger arrangement maintains a block chain (shown with a chain of blocks **1A, 1B** and **1C**) whose operation is controlled via use of a directed acyclic graph (DAG) (shown between two consecutive blocks). As shown, the blocks **1A, 1B** and **1C** are blocks of the blockchain containing as well as references to one or more contributed executable contract object forming the ledger arrangement. Furthermore, each block is connected to a previous block within the ledger arrangement, that is, block **1C** is connected to previous block **1B** and further **1B** is connected to **1A**. Additionally, dashed lines in the figure shows a block period (namely, a block-time). Furthermore, a computing device (depicted as a computing device **3A**) from the plurality of computing devices is an elected miner for a block period associated with the block **1A** and is permitted to add a new block to the block chain. Furthermore, the elected miner **3B** in a block period associated with block **1B** and the plurality of computing devices may provide useful work **2B** by executing tasks that are allocated to them. Moreover, based on the plurality of useful work **2B,** a miner **3B** is permitted to add a new block. The elected leader **3B** is operable to close the block **1B** by adding the block **1B** to the blockchain. Subsequently, the plurality of miners submits useful work **2C** and a miner **3C** is granted permission to add a new block to the blockchain. Subsequently, **3C** is elected miner for a block period associated with the block **1B**. The elected miner **3C** for block **1B** is permitted add a new block **1C** to the block chain.

It may be understood by a person skilled in the art that the FIG. 2 is merely an example, which should not unduly limit the scope of the claims herein. The person skilled in the art will recognize many variations, alternatives, and modifications of embodiments of the present disclosure.

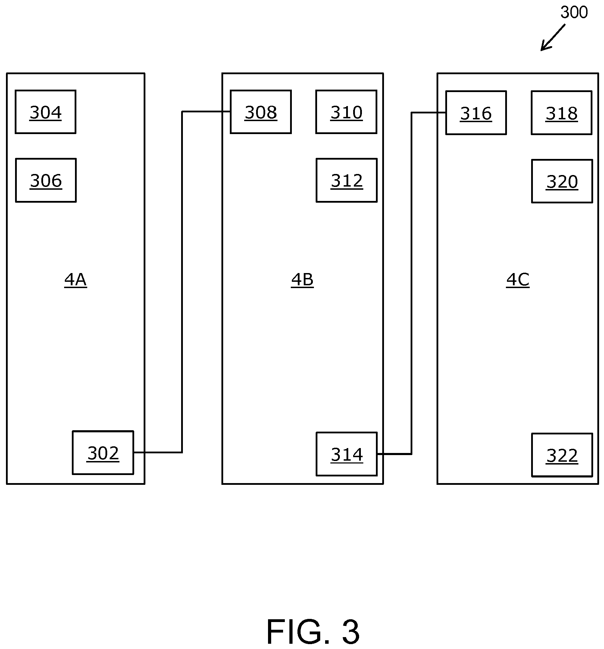

Referring to FIG. 3, there is provided a schematic illustration of a chain of micro-programs **300,** in accordance with an embodiment of the present disclosure. The chain of micro-programs **300** includes micro-programs **4A, 4B** and **4C** associated with each other in a linear structure. Furthermore, the micro-program **4A** is initiated with an initiator value **302**. In addition, the micro-program **4A** includes a nonce **304** and a public key **306**. The micro-program **4A** is linked to the microprogram **4B,** wherein the microprogram **4B** includes an initiator value **308,** an access means to directed acyclic database (DAG) **310,** an access means to a state database **312** and checkpoint **314** of the microprogram **4B**. Furthermore, the microprogram **4B** is linked with the microprogram **4C**. The microprogram **4C** includes an initiator value **316,** an access means to directed acyclic database (DAG) **318,** an access means to a state database **320**. In addition, the microprogram **4C** includes a checkpoint **322** associated therewith.

It may be understood by a person skilled in the art that the FIG. 3 is merely an example, which should not unduly limit the scope of the claims herein. The person skilled in the art will recognize many variations, alternatives, and modifications of embodiments of the present disclosure.

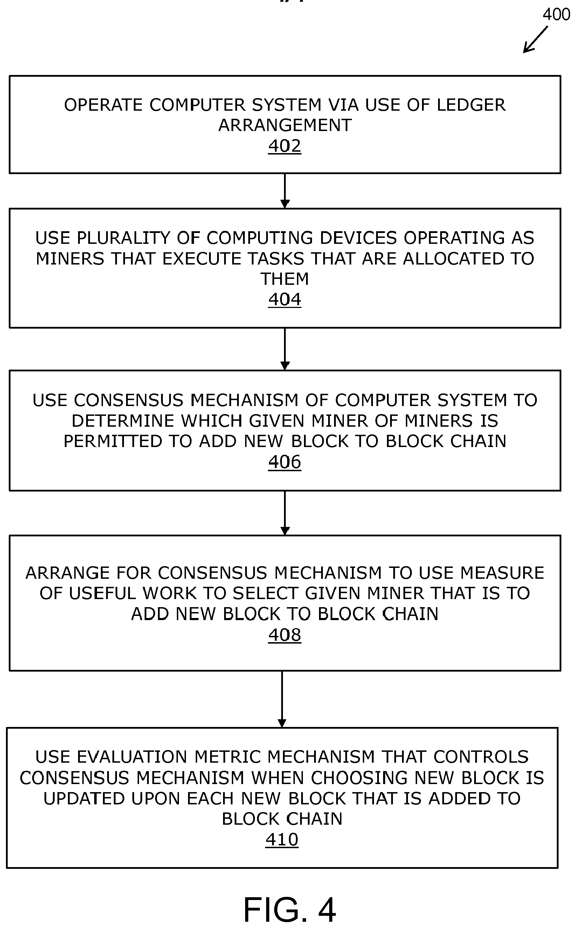

Referring to FIG. 4, there is provided an illustration of a flow chart of steps of a method **400** of (namely, a method for) operating a computer system, in accordance with an embodiment of the present disclosure; for example, the computer system is implemented as described in the foregoing. In the method **400,** the computer system includes a plurality of spatially distributed computing devices that are coupled via a data communication network to exchange data therebetween, wherein the computing devices operate to execute data processing tasks in an asynchronous manner. At a step **402,** the computer system operates via use of a ledger arrangement. The ledger arrangement maintains a block chain whose operation is controlled via use of a directed acyclic graph (DAG). At a step **404,** a plurality of the computing devices operating as miners that execute tasks that are allocated to them are used for operating the computer system. At a step **406,** a consensus mechanism of the computer system is used to determine which given miner of the miners is permitted to add a new block to the block chain. At a step **408,** a measure of useful work is arranged to be used by the consensus mechanism to select the given miner that is to add the new block to the block chain. The useful work includes the miners training machine learning models, wherein the machine learning models are stored in the directed acyclic graph (DAG). At a step **410,** an evaluation metric mechanism is used. The evaluation metric mechanism controls the consensus mechanism when choosing the new block is updated upon each new block that is added to the block chain. In the method **400,** exchange of data between computing devices of the computer system are encrypted and/or obfuscated, to reduce a risk of malicious third-party attacks disrupting functioning of the computer system.

The steps **402, 404, 406, 408,** and **410** are only illustrative and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

APPENDIX

Elements of an example smart contract for executing within the aforesaid computer system of the present disclosure are elucidated in greater detail below:

| **Smart Contract** | |
| --- | --- |
| Contract Summary | Given a set X of N training examples, and Y training labels, develop a model to give P(Y\|X). Model size/complexity will be penalised. |
| | **Program:** ai.fetch.predictor; |
| Data Specification | **Type:** ModelDescriptionType:<br>    Scores: **Vector< Val >;** // per datapoint losses<br>    Parameters: **Vector< Val >;** // full list of parameters<br>**Endtype:**<br>    **Global** X: **Vector< Val >;** // task input<br>    **Global** Y: **Vector< Val >;** // task expected outputs<br>    **Global** W: **Vector< Val >;** // weightings for each data point<br>    **Global** alpha: **Val** (1); // weighting for model performance<br>    **Global** beta: **Val** (0.1); // weighting for complexity<br>    **Global** Models: **Dict< PublicKey,** ModelDescriptionType >;<br>    **Global** Predictions: **Dict<** ModelDescriptionType, **Vector< Val >>;** |
| Contract body | **Function** UpdateWeights ()<br><br>    **Var** count = 0;<br>    **Var** normaliser = 1 / len (Models)<br>    **Var** scores = **Vector(len**(W)**,** 0); // per-datapoint total scores<br><br>    // update weighting on each data point<br><br>        **For** (key, model **in** Models)<br>        **For** (i **in len**(model.scores))<br>        Scores[i] += model.scores[i]<br>        **For** (i **in len(W))**<br>        W[i] = scores[i] / sum(scores)<br><br>    // update relative weighting for penalising<br><br>    Prediction error vs Model complexity<br><br>    // prefer more constrained models over time<br><br>        Alpha = Alpha * 0.9<br>        Beta = Beta * 1.1<br><br>    **Endfunction:**<br><br>        **Function:** ForwardPass (ModelDescriptionType model)<br><br>    // multiply each input by each parameter value<br>        **Vector** y_hat{ }; |

(continued)

| Smart Contract | |
|---|---|
| | `For(x in X)`<br>`Var val = 1;`<br>`For (param in model.parameters)`<br>`Val *= param`<br>`Y_hat.push_back(val);`<br>`Predictions[model] = y_hat;`<br><br>`Endfunction` |
| Mining Algorithm | // since the miners can perform computation locally, the mining function may be simply submitting the ModelDescription data<br><br>**Mining function:** SubmitModel (**PublicKey** public_key, **ModelDescriptionType** ModelDescription)<br><br>Models[public_key] = ModelDescription; **Endfunction** |
| Objective Algorithm | **Objective function Evaluator** (**List**< **Pair**< PublicKey, ModelDescriptionType > > solutions)<br><br>**Vector** losses;<br>**For** (key, model **in** solutions)<br>**Var** performance = 0;<br>**Var** y_hat;<br><br>// weighted mean square error<br><br>**For** (i **in** len(Y))<br>y_hat = ForwardPass (model X[i])<br>performance += Cur_W[i] * (y[i] - y_hat)^2;<br>performance *= alpha; |
| | // Model complexity penalisation, use L1 norm<br><br>**Var** penalty = 0<br>**For** (param **in** model.parameters)<br>Penalty += abs(param)<br>Losses.push_back(alpha * performance + beta * penalty);<br>**Return** losses;<br><br>**Endfunction** |

**Claims**

1. A computer system including a plurality of spatially distributed computing devices that are coupled via a data communication network to exchange data therebetween, wherein the computing devices operate to execute data processing tasks in an asynchronous manner, **characterized in that**:

(i) the computer system is operated via use of a ledger arrangement, wherein the ledger arrangement maintains a block chain whose operation is controlled via use of a directed acyclic graph (DAG);
(ii) a plurality of the computing devices operate as miners that execute tasks that are allocated to them;
(iii) a consensus mechanism of the computer system determines which given miner of the miners is permitted to add a new block to the block chain;

(iv) the consensus mechanism uses a measure of useful work to select the given miner that is to add the new block to the block chain, wherein the useful work includes the miners' training machine models, wherein the machine models are stored in the directed acyclic graph (DAG); and

(v) an evaluation metric mechanism that controls the consensus mechanism, when choosing the new block, being updated upon each new block that is added to the block chain.

2. The computing system of claim 1, wherein the evaluation metric mechanism is updated after each new block is added to the block chain, wherein the evaluation metric mechanism is updated in a random or pseudo-random manner.

3. The computing system of claim 2, wherein a hash of each new block is converted to a numeral modulo including a fixed number, wherein the fixed number is converted into a position in a probability distribution that determines values for parameters D, M, $\alpha$, and $\beta$ that are used for evaluating a selection by the consensus mechanism of a next new block to add to the block chain.

4. The computing system of claim 3, wherein the evaluation metric mechanism is computed by the consensus mechanism by employing a relationship:

$$L = \Sigma \, ||y_i - \hat{y}_i|| + (\alpha D + \beta M)$$

wherein:

(i) a parameter L denotes a loss;
(ii) a parameter D denotes a data-specific performance weighting; and
(iii) a parameter M denotes a model specific performance, with $\alpha$ and $\beta$ being coefficients that vary from block-to-block of the block chain.

5. The computing system of any one of the preceding claims, wherein the consensus mechanism uses a verification process to determine the measure of useful work to select the given miner that is to add the new block to the block chain.

6. The computing system of any one of the preceding claims, wherein the computing system is coupled to a sensing arrangement that provides input data to the system representative of measure physical parameters of a real physical environment, and the block chain is employed to generate output data via use of smart contracts associated with the block chain, wherein the output data is used as control parameters for controlling operation of the real physical environment.

7. A method of operating a computer system including a plurality of spatially distributed computing devices that are coupled via a data communication network to exchange data therebetween, wherein the computing devices operate to execute data processing tasks in an asynchronous manner,
**characterized in that** the method includes:

(i) operating the computer system via use of a ledger arrangement, wherein the ledger arrangement maintains a block chain whose operation is controlled via use of a directed acyclic graph (DAG);
(ii) using a plurality of the computing devices operating as miners that execute tasks that are allocated to them;
(iii) using a consensus mechanism of the computer system to determine which given miner of the miners is permitted to add a new block to the block chain;
(iv) arranging for the consensus mechanism to use a measure of useful work to select the given miner that is to add the new block to the block chain, wherein the useful work includes the miners' training machine models, wherein the machine models are stored in the directed acyclic graph (DAG); and
(v) using an evaluation metric mechanism that controls the consensus mechanism when choosing the new block is updated upon each new block that is added to the block chain.

8. A computer program product comprising a non-transitory computer-readable storage medium having computer-readable instructions stored thereon, the computer-readable instructions being executable by a computerized device comprising processing hardware to execute a method as claimed in claim 7.

100

104

106

102

108

110

FIG. 1

FIG. 2

300

| | | |
|---|---|---|
| 304 | 308 | 310 | 316 | 318 |
| 306 | | 312 | | 320 |
| 4A | 4B | 4C |
| 302 | 314 | 322 |

## FIG. 3

400

OPERATE COMPUTER SYSTEM VIA USE OF LEDGER
ARRANGEMENT
402

USE PLURALITY OF COMPUTING DEVICES OPERATING AS
MINERS THAT EXECUTE TASKS THAT ARE ALLOCATED TO
THEM
404

USE CONSENSUS MECHANISM OF COMPUTER SYSTEM TO
DETERMINE WHICH GIVEN MINER OF MINERS IS
PERMITTED TO ADD NEW BLOCK TO BLOCK CHAIN
406

ARRANGE FOR CONSENSUS MECHANISM TO USE MEASURE
OF USEFUL WORK TO SELECT GIVEN MINER THAT IS TO
ADD NEW BLOCK TO BLOCK CHAIN
408

USE EVALUATION METRIC MECHANISM THAT CONTROLS
CONSENSUS MECHANISM WHEN CHOOSING NEW BLOCK IS
UPDATED UPON EACH NEW BLOCK THAT IS ADDED TO
BLOCK CHAIN
410

FIG. 4

Europäisches
Patentamt

European
Patent Office

Office européen
des brevets

## EUROPEAN SEARCH REPORT

Application Number

EP 19 02 0070

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/212781 A1 (DILLENBERGER DONNA ENG [US] ET AL) 27 July 2017 (2017-07-27)<br>* paragraph [0001] *<br>* paragraph [0003] *<br>* paragraph [0005] *<br>* paragraph [0025] - paragraph [0027] *<br>* paragraph [0032] - paragraph [0033] *<br>* paragraph [0037] - paragraph [0038] *<br>* paragraph [0043] *<br>* figures 2-4 * | 1-8 | INV.<br>G06F21/60 |
| Y | CN 107 743 064 A (SHENZHEN YI CHENG AUTOMATIC DRIVING TECH CO LTD) 27 February 2018 (2018-02-27)<br>* paragraph [0002] *<br>* paragraph [0005] *<br>* paragraph [0018] *<br>* paragraph [0044] - paragraph [0045] *<br>* paragraph [0048] - paragraph [0049] *<br>* paragraph [0056] *<br>* paragraph [0058] - paragraph [0061] *<br>* paragraph [0066] - paragraph [0069] *<br>* figures 1-4 * | 1-8 | |
| A | Rev Hanke Timo ET AL: "DFINITY Technology Overview Series Consensus System",<br>,<br>23 January 2018 (2018-01-23), XP055599959,<br>Retrieved from the Internet:<br>URL:https://dfinity.org/pdf-viewer/library/dfinity-consensus.pdf<br>[retrieved on 2019-06-26]<br>* abstract *<br>* Section 2 *<br>* Section 3 *<br>* Section 7 *<br>* figure 1 * | 1-8 | TECHNICAL FIELDS SEARCHED (IPC)<br><br>H04L<br>G06F |

The present search report has been drawn up for all claims

| Place of search | Date of completion of the search | Examiner |
|---|---|---|
| Munich | 28 June 2019 | Bharucha, Zubin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 02 0070

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2019

| Patent document cited in search report | | Publication date | Patent family member(s) | Publication date |
|---|---|---|---|---|
| US 2017212781 | A1 | 27-07-2017 | NONE | |
| CN 107743064 | A | 27-02-2018 | NONE | |

EPO FORM P0459

For more details about this annex : see Official Journal of the European Patent Office, No. 12/82